# EUROPÄISCHE PATENTSCHRIFT

(11) **EP 1 954 939 B1**
(45) Veröffentlichungstag und Bekanntmachung des Hinweises auf die Patenterteilung: **13.01.2016**
(21) Anmeldenummer: 06807189.3
(22) Anmeldetag: 12.10.2006
(51) Int. Cl.: F02M 65/00, G01M 3/28

(54) **VERFAHREN UND VORRICHTUNG ZUR ERMITTLUNG DER HYDRAULISCHEN LECKRATE VON FLÜSSIGKEITSFÜHRENDEN TEILEN, INSBESONDERE EINSPRITZVENTILEN FÜR BRENNKRAFTMASCHINEN**
METHOD AND DEVICE FOR DETERMINING HYDRAULIC LEAKAGE RATE IN LIQUID-CONVEYING SECTIONS, IN PARTICULAR, INJECTION VALVES OF INTERNAL COMBUSTION ENGINES
PROCEDE ET DISPOSITIF POUR DETERMINER LE DEBIT DE FUITE HYDRAULIQUE DE PIECES DE GUIDAGE DE LIQUIDE, EN PARTICULIER DE SOUPAPES D'INJECTION POUR DES MOTEURS A COMBUSTION INTERNE

(30) Priorität: 23.11.2005 DE 102005055746
(43) Veröffentlichungstag der Anmeldung: 13.08.2008
(73) Patentinhaber: ROBERT BOSCH GMBH, 70442 Stuttgart (DE)
(72) Erfinder: MAIER, Martin, 71696 Moeglingen (DE); MOZER, Frank, 70378 Stuttgart-Hofen (DE); WAIBLER, Eberhard, 71254 Ditzingen (DE)
(86) Internationale Anmeldenummer: PCT/EP2006/067321
(87) Internationale Veröffentlichungsnummer: WO 2007/060061

(56) Entgegenhaltungen:
- DE-A1- 19 838 749
- DE-C1- 4 026 228
- JP-A- 2003 206 832
- US-A- 5 750 999

## Beschreibung

### Stand der Technik

Die Erfindung geht aus von einem Verfahren zur Ermittlung der hydraulischen Leckrate von flüssigkeitsfülirenden Teilen, insbesondere Einspritzventilen für Brennkraftmaschinen nach der Gattung des Anspruchs 1 und von einer Vorrichtung zur Ermittlung der hydraulischen Leckrate von flüssigkeitsführenden Teilen, insbesondere Einspritzventilen für Brennkraftmaschinen nach der Gattung des Anspruchs 9.

Aus der DE 40 26 228 C1 ist bereits eine Prüfeinrichtung zur Ermittlung der hydraulischen Leckrate eines Brennstoffeinspritzventils insbesondere für Brennkraftmaschinen bekannt. Diese Prüfeinrichtung ist schräg in einem mit Flüssigkeit gefüllten Gefäß angeordnet, in welches auch ein durch ein Absperrventil trennbares Ausgleichsgefäß sowie ein als Glaskapillare ausgebildetes Steigrohr mündet, wobei der Pegelstand der Kapillare von einer Lichtquelle beleuchtet wird und die Ermittlung des Pegelstandes durch eine lineare Zeilenkamera erfasst wird. Nach dem Messen des Anfangspegelstandes in der Kapillare wird das Einspritzventil mit Prüfdruck beaufschlagt und nach der Messzeit die Verschiebung des Pegelstandes in der Kapillare über die Zeilenkamera gemessen. Über die Messzeit, die Querschnittsfläche sowie den Verschiebeweg in der Kapillare lässt sich die Leckrate des Einspritzventils berechnen. Eine solche Prüfeinrichtung ist kompliziert in ihrem Aufbau und lässt keine absolut exakten Messergebnisse zu.

Außerdem ist schon bekannt, zur Bestimmung der Leckrate an einem Einspritzventil eine Prüfeinrichtung einzusetzen, bei der das Einspritzventil in einen Prüfkörper eingebracht wird, wobei das Einspritzventil mit einer Prüfflüssigkeit unter Druck beaufschlagt wird und die in den Prüfkörper abgegebene Leckagemenge mittels Raumluft weggerissen wird. Die Leckrate lässt sich dann dadurch ermitteln, dass die Konzentration der Prüfflüssigkeit im Raumluftstrom mit einem Analysator gemessen und ausgewertet wird. Eine solche Prüfeinrichtung weist den Mangel auf, dass die Flüssigkeitsleckage, insbesondere bei Flüssigkeiten mit niedrigen Dampfdrücke, unvollständig und undefiniert in die Dampfphase umgesetzt wird, wodurch der ermittelte Messwert bzw. sein zeitlicher Verlauf verfälscht werden. In nachteiliger Weise werden so zum Teil zu niedrige und zum Teil zu hohe Leckageflüsse während ein und demselben Messvorgang angezeigt. Außerdem kann eine partiell oder vollständig erzeugte Dampfphase nach der Leckagestelle insbesondere an kühleren Stellen des Prüfkörpers oder an anderen Stellen der Prüfeinrichtung kondensieren, wodurch ebenfalls der Messwert verfälscht werden kann. Auch hier besteht die Gefahr des Messens eines zu niedrigen und/oder zu hohen bzw. eines durchaus stark schwankenden Leckageflusses. Dieser Nachteil tritt insbesondere bei Messungen mit Flüssigkeiten bzw. Flüssigkeitsgemischen auf, die unter Messraumbedingungen mit einem bestimmten Druck, einer Temperatur oder Konzentration kondensieren.

Aus der DE 198 38 749 A1 ist bereits eine Vorrichtung zur Ermittlung der hydraulischen Leckrate von flüssigkeitsführenden Teilen, insbesondere Einspritzventilen für Brennkraftmaschinen, bekannt, die einen Prüfkörper, in den das zu überprüfende flüssigkeitsführende Teil einsetzbar ist, das mit einer Prüfflüssigkeit beaufschlagbar ist, umfasst. In dem Prüfkörper ist ein Strömungskanal integriert, in dem ein Trägergasstrom bereitstellbar ist, wobei der Trägergasstrom von einer Probenahmepumpe angesaugte Raumluft ist. Über einen an dem Prüfkörper angeschlossenen Schlauch wird das Fluid hinter dem flüssigkeitsführenden Teil bis zu einem HC-Analysator gefördert, wo insbesondere die Kahlenwasserstoffkonzentration des Fluidstroms gemessen wird. Auch aus von der Druckschrift JP 2003-206832 ist eine vorrichtung zur Ermittlung der hydraulischen Leckrate von flüssigkeiteführenden Teilen bekannt.

### Vorteile der Erfindung

Das erfindungsgemäße Verfahren zur Ermittlung der hydraulischen Leckrate von flüssigkeitsführenden Teilen, insbesondere Einspritzventilen für Brennkraftmaschinen mit den Merkmalen des Anspruchs 1 sowie die erfindungsgemäße Vorrichtung zur Ermittlung der hydraulischen Leckrate von flüssigkeitsführenden Teilen, insbesondere Einspritzventilen für Brennkraftmaschinen mit den Merkmalen des Anspruchs 9 haben den Vorteil, dass auf einfache und kostengünstige Art und Weise sehr exakte Messergebnisse erzielbar sind. Dabei wird in vorteilhafter Weise die austretende Flüssigkeitsleckage vollständig in die Dampfphase umgesetzt und darin solange gehalten, bis die eigentliche Konzentrationsmessung erfolgt.

In vorteilhafter Weise ist dafür ein Düsenkörper nahe der Leckagestelle des flüssigkeitsführenden Teils zum Abblasen und Mitreißen der durch die Leckagestelle austretenden Prüfflüssigkeit mittels des Trägergasstroms positioniert.

Durch die in den Unteransprüchen aufgeführten Maßnahmen sind vorteilhafte Weiterbildungen und Verbesserungen des im Anspruch 1 angegebenen Verfahrens und der im Anspruch 9 angegebenen Vorrichtung möglich.

Besonders vorteilhaft ist es, hinter der Leckagestelle des flüssigkeitsführenden Teils, insbesondere des Einspritzventils in dem Prüfkörper ein Heizelement vorzusehen. Durch das Beheizen des Trägergasstroms auf einer genügend langen Strecke im Prüfkörper wird eine Rückkondensation der Dampfphase verhindert. Die Dampfphase bleibt vollständig bis zum Eintrag in den der Messung und Analyse dienenden Analysator erhalten. In vorteilhafter Weise können als Heizelemente einfache und billige Heizschläuche verwendet werden.

Der Druck der Prüfflüssigkeit kann mit < 1 bar sehr niedrig gewählt werden, da mit den erfindungsgemäßen Maßnahmen des Einbringens eines Düsenkörpers bis nahe an die Leckagestelle und des Vorsehens eines Heizelements hinter der Leckagestelle auch Leckagen ohne Druckerzeugung bestimmbar sind.

### Zeichnung

Ausführungsbeispiele der Erfindung sind in der Zeichnung vereinfacht dargestellt und in der nachfolgenden Beschreibung näher erläutert. Es zeigen Figur 1 eine schematische Darstellung einer ersten Vorrichtung zur Ermittlung der hydraulischen Leckrate von Einspritzventilen, insbesondere für Brennkraftmaschinen, Figur 2 eine schematische Darstellung einer zweiten Vorrichtung zur Ermittlung der hydraulischen Leckrate von Einspritzventilen, insbesondere für Brennkraftmaschinen und Figur 3 ein Diagramm mit zwei im Vergleich aufgetragenen Messkurven bzgl. der HC-Konzentration in einem Dampfgemisch hinter einer Sitzleckagestelle eines Einspritzventils mit und ohne die erfinderischen Maßnahmen, ermittelt mit einem Flammenionisationsdetektor (FID).

### Beschreibung der Ausführungsbeispiele

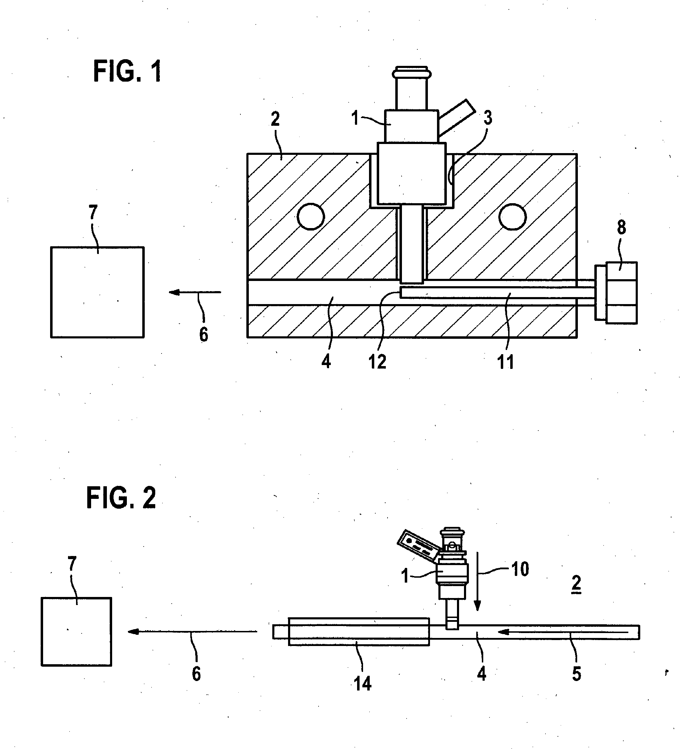

In der Figur 1 ist eine schematische Darstellung einer ersten Vorrichtung zur Ermittlung der hydraulischen Leckrate von Einspritzventilen, insbesondere für Brennkraftmaschinen gezeigt. Dabei ist das konturhaft gezeigte Brennstoffeinspritzventil 1 beispielsweise als elektromagnetisch betätigbares Ventil in der Form eines Einspritzventils für Brennstoffeinspritzanlagen von gemischverdichtenden, fremdgezündeten Brennkraftmaschinen ausgeführt. Ein solches Brennstoffeinspritzventil 1 besitzt als Aktuator einen elektromagnetischen Kreis mit einer Magnetspule, mit einem als Innenpol dienenden Kern, mit einem äußeren Magnetbauteil sowie einem bewegbaren Anker, der wiederum mit einem Ventilschließkörper in Wirkverbindung steht. Der Ventilschließkörper wirkt mit einem festen Ventilsitz zum Öffnen und Schließen des Einspritzventils zusammen, wobei dem Ventilsitz stromabwärts wenigstens eine Abspritzöffnung folgt, über die Brennstoff gezielt abgegeben wird.

Als erregbarer Aktuator des Brennstoffeinspritzventils 1 kann anstelle des elektromagnetischen Kreises z.B. auch ein piezoelektrischer oder magnetostriktiver Antrieb vorgesehen sein.

Das in der Figur 1 dargestellte Brennstoffeinspritzventil 1 stellt ein besonders geeignetes Beispiel für ein flüssigkeitsführendes Teil dar, das in die erfindungsgemäße Vorrichtung zur Ermittlung einer hydraulischen Leckrate einbaubar ist und an dem das erfindungsgemäße Verfahren zur Bestimmung der Leckrate vollführbar ist. Die Erfindung ist jedoch keineswegs auf Brennstoffeinspritzventile 1 beschränkt, sondern auch bei zahlreichen anderen flüssigkeitsführenden Teilen anwendbar, um eine optimierte Konditionierung von Leckagestellen an solchen Teilen, Bauteilen, Aggregaten, Ventilen, Düsen usw. vorzunehmen.

Die erfindungsgemäße Vorrichtung zur Ermittlung der hydraulischen Leckrate von flüssigkeitsführenden Teilen, insbesondere Einspritzventilen 1 für Brennkraftmaschinen, umfasst eirien Prüfkörper 2, der eine Aufnahmebohrung 3 für das flüssigkeitsführende Teil, hier das Brennstoffeinspritzventil 1 aufweist. Weitgehend senkrecht zur Ausrichtung der Aufnahmebohrung 3 verläuft durch den Prüfkörper 2 ein Strömungskanal 4, der dem Zuleiten eines Trägergasstroms, angedeutet durch den Pfeil 5 in Figur 2, und dem Ableiten eines Dampfgemisches, angedeutet durch den Pfeil 6, zu einem Analysator 7 hin dient. Das Trägergas 5, insbesondere Stickstoff N₂, wird über eine nicht dargestellte Förderpumpe dem Prüfkörper 2 bereitgestellt. Über ein Anschlussaggregat 8 kann das Trägergas 5 sicher und zuverlässig und leckagefrei in den Strömungskanal 4 des Prüfkörpers 2 eingebracht werden.

Zur Ermittlung der hydraulischen Leckrate des Brennstoffeinspritzventils 1 wird dieses mit einer Prüfflüssigkeit, angedeutet durch den Pfeil 10, beaufschlagt. Als Prüfflüssigkeit 10 kommt insbesondere n-Heptan (C₇H₁₆) zum Einsatz. Allerdings können als Prüfflüssigkeit 10 ebenfalls alle reinen flüssigen Kohlenwasserstoffe, Benzine oder reine Alkohole verwendet werden. In praktischen Anwendungsfällen wird die Prüfflüssigkeit 10 mit einem Druck im Bereich von < 1 bis 200 bar in das flüssigkeitsführende Teil, insbesondere das Brennstoffeinspritzventil 1 eingebracht. Die Prüfflüssigkeit 10 kann in optimaler Weise in einem Temperaturbereich von -40°C bis 140°C verwendet werden. Unter der Wirkung der druckbehaftet in das Brennstoffeinspritzventil 1 gegebenen Prüfflüssigkeit 10 zeigen sich am stromabwärtigen Ende des Brennstoffeinspritzventils 1 gewisse Leckagen, die insbesondere an Sitzleckagestellen austreten und in den Strömungskanal 4 des Prüfkörpers 2 gelangen.

Aufgabe der Erfindung ist es, möglichst optimierte, schwanlcungsfreie und sehr exakte Messergebnisse der Leckagen der Brennstoffeinspritzventile 1 zu erzielen. In vorteilhafter Weise ist dazu ausgehend von dem Anschlussaggregat 8 ein Düsenkörper 11 in den Strömungskanal 4 eingebracht, dessen wenigstens eine Düsenöffnung 12 in unmittelbarer Nähe des Leckagebereichs, also der Sitzleckagestelle des Brennstoffeinspritzventils 1 positioniert ist. Über den Düsenkörper 11 wird insofern das Trägergas 5 unmittelbar bis dicht an die Leckagestelle transportiert, so dass es unmittelbar hinter der Düsenöffnung 12 die Leckageflüssigkeit abblasen und mitreißen kann. Bei Verwendung von N₂ als Trägergas 5 sollte auf eine Reinheitsklasse 5 oder höher geachtet werden. In praktischen Anwendungsfällen wird das Trägergas 5 in einem Druckbereich von 0,5 bis 2 bar eingeblasen. Auch das Trägergas 5 kann typischerweise in einem Temperaturbereich von -40°C bis 140°C verwendet werden. Der z.B. kontinuierlich geförderte Trägergasstrom 5 liegt in idealer Weise zwischen 0,5 und 10 Normliter/min. Durch den weitgehend auf die Leckagestelle gerichteten Düsenkörper 12 wird in erfindungsgemäßer Weise die austretende Flüssigkeitsleckage vollständig in die Dampfphase umgesetzt und darin solange gehalten, bis die eigentliche Konzentrationsmessung in dem Analysator 7 erfolgt. Direkt an der Leckagestelle des zu prüfenden Teils werden durch den Gasfreistrahl des Trägergases 5 des Düsenkörpers 11 ein starkes Konzentrationsgefälle und/oder eine hohe Ablösekraft erzeugt, die das vollständige Verdampfen der Leckageflüssigkeit ermöglichen. Eine nachteilige mechanische Kontaktierung oder Veränderung der Leckagestelle ist auf diese Weise ausgeschlossen.

Figur 2 zeigt eine schematische Darstellung einer zweiten Vorrichtung zur Ermittlung der hydraulischen Leckrate von Einspritzventilen, insbesondere für Brennkraftmaschinen. Der Prüfkörper 2 ist hierbei mit einem Heizelement 14 versehen. Besonders vorteilhaft ist es, unmittelbar hinter der Leckagestelle des flüssigkeitsführenden Teils, insbesondere des Brennstoffeinspritzventils 1 das Heizelement 14 anzuordnen. Durch das Beheizen des Trägergasstroms 5 bzw. des Dampfgemisches 6 auf einer genügend langen Strecke im bzw. am Prüfkörper 2 wird eine Rückkondensation der Dampfphase verhindert. Die Dampfphase bleibt vollständig bis zum Eintrag in den der Messung und Analyse dienenden Analysator 7 erhalten. In vorteilhafter Weise können als Heizelemente 14 einfache und billige Heizschläuche verwendet werden.

Der Druck der Prüfflüssigkeit 10 kann mit < 1 bar sehr niedrig gewählt werden, da mit den erfindungsgemäßen Maßnahmen des Einbringens eines Düsenkörpers 11 bis nahe an die Leckagestelle und des Vorsehens eines Heizelements 14 hinter der Leckagestelle auch Leckagen ohne Druckerzeugung bestimmbar sind.

Die erfindungsgemäßen Maßnahmen des Einbringens eines Düsenkörpers 11 bis nahe an die Leckagestelle und des Vorsehens eines Heizelements 14 hinter der Leckagestelle können selbstverständlich zusammen an dem Prüfkörper 2 zum Einsatz kommen, wobei in der Kombination der beiden Maßnahmen das vollständige Umsetzen der Prüfflüssigkeit 10 in die Dampfphase sogar am wirkungsvollsten gelingt.

Zum Messen der Leckage des Brennstoffeinspritzventils 1 wird das Dampfgemisch 6 in den Analysator 7 eingebracht, wobei der Analysator 7 dazu dient, die möglicherweise im Dampfgemisch 6 in der Dampfphase enthaltene Prüfflüssigkeit 10 zu detektieren. Besonders als Analysatoren 7 geeignet sind dabei Flammenionisationsdetektoren (FID) bzw. Gaschromatographen (GC) im Hauptstrom- oder Nebenstrombetrieb. Der Flammenionisationsdetektor ist ein Detektor für organische Verbindungen (Kohlenwasserstoffe), der auch in Verbindung mit einem Gaschromatographen eingesetzt werden kann. Funktionsprinzip ist die Messung der Leitfähigkeit einer Knallgasflamme (Wasserstoff als Brenngas) zwischen zwei Elektroden. Zu analysierende Substanzen werden mit einem Trägergasstrom in die Flamme transportiert und dort thermisch ionisiert. Dadurch wird im Spannungsfeld ein messbarer Ionenstrom erzeugt, der an einem angeschlossenen Schreiber oder Datensystem aufgezeichnet wird. Die HC-Konzentration des Dampfgemisches 6 kann auf diese Weise sehr einfach und exakt bestimmt werden, wodurch genaue Rückschlüsse auf die Größe der Leckage des zu prüfenden flüssigkeitsfiihrenden Teils ziehbar sind.

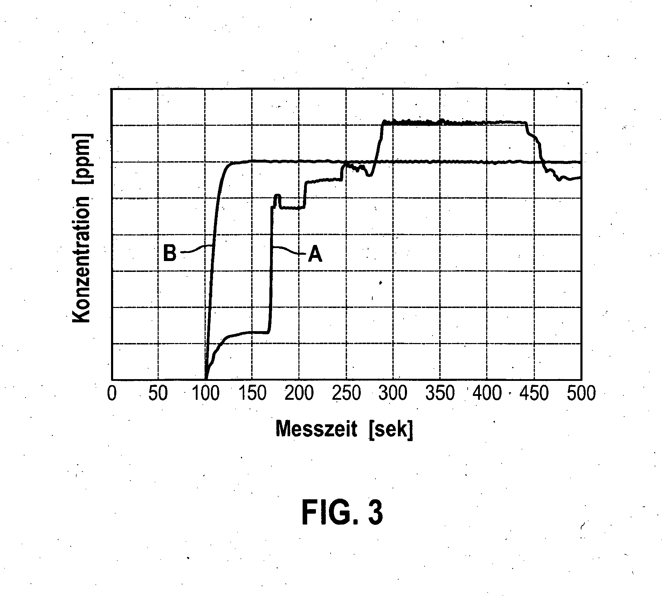

In der Figur 3 ist ein Diagramm mit zwei im Vergleich aufgetragenen Messkurven bzgl. der HC-Konzentration in einem Dampfgemisch 6 hinter einer Sitzleckagestelle eines Brennstoffeinspritzventils 1 mit und ohne die erfinderischen Maßnahmen, ermittelt mit einem Flammenionisationsdetekfor (FID), gezeigt. Über eine Messzeit von 500 s ist dabei die im Dampfgemisch 6 enthaltene HC-Konzentration aufgetragen. Beide Messkurven wurden unter vergleichbaren Rahmenbedingungen, wie Art, Druck und Temperatur der Prüfflüssigkeit 10 sowie Art, Druck und Temperatur des Trägergases 5 an ein und demselben Brennstoffeinspritzventil 1 aufgezeichnet. Die HC-Konzentrationsmessung mittels eines Analysators 7 in Form eines Flammenionisationsdetektors zur Bestimmung der hydraulischen Leckrate des Brennstoffeinspritzventils 1 erfolgte dabei einmal mit einem Prüfkörper 2 ohne Düsenkörper 11 und Heizelement 14 (Messkurven A), und einmal mit einem Prüfkörper 2, an dem der Düsenkörper 11 und das Heizelement 14 integriert waren (Messkurve B).

Da bei einer Prüfeinrichtung ohne die erfindungsgemäßen Merkmale die Flüssigkeitsleckage unvollständig und undefiniert in die Dampfphase umgesetzt wird, sind die mit dem Analysator 7 ermittelten Messwerte bzw. deren zeitliche Verläufe in gewisser Weise verfälscht. Das Diagramm in Figur 3 macht deutlich, dass in nachteiliger Weise zum Teil zu niedrige und zum Teil zu hohe Leckageflüsse während ein und demselben Messvorgang angezeigt werden, die dazu noch erheblich schwanken können. Im Gegensatz dazu ermöglichen der Einsatz des Düsenkörpers 11 und des Heizelements 14 eine sehr exakte Bestimmung der HC-Konzentration, wobei der Messwert bereits nach einer Messzeit von ca. 120 s ohne größere Schwankungen feststeht, wie die Messkurve B verdeutlicht.

Das Verfahren zur Ermittlung der hydraulischen Leckrate von flüssigkeitsführenden Teilen 1, hier von Brennstoffeinspritzventilen 1, wird derart angewendet, dass das wenigstens eine Brennstoffeinspritzventil 1 vor dem Einbau in die Brennkraftmaschine in erfindungsgemäßer Weise geprüft wird und nachfolgend nur diejenigen Brennstoffeinspritzventile 1 in die Brennkraftmaschine eingebaut werden, deren hydraulische Leckrate niedriger ist als eine vorher bestimmte Grenzwertleckrate.

## Patentansprüche

1. Verfahren zur Ermittlung der hydraulischen Leckrate von flüssigkeitsführenden Teilen, insbesondere Einspritzventilen für Brennkraftmaschinen mit den folgenden Verfahrensschritten
Einsetzen des flüssigkeitsführenden Teils (1) in einen Prüfkörper (2), Beaufschlagen des flüssigkeitsführenden Teils (1) mit einer Prüfflüssigkeit (10) unter einem bestimmten Druck,
- Bereitstellen eines Trägergasstroms (5) in einem Strömungskanal (4) des Prüfkörpers (2),
- Ableiten eines Dampfgemisches (6) hinter dem flüssigkeitsfuhrenden Teil (1) bis hin zu einem Analysator (7),
- Messen und Analysieren der hydraulischen Leckrate des flüssigkeitsführenden Teils (1) über die Konzentration der Prüfflüssigkeit (10) Im Dampfgemisch (6) mittels des Analysators (7),
**gekennzeichnet durch** den Verfahrensschritt
- Einbringen des Trägergasstroms (5) über einen Düsenkörper (11) nahe an die Sitzleckagestelle des flüssigkeitsführenden Teils (1), wobei der Düsenkörper (11) in das Innere des Strömungskanal (4) eingebracht und die wenigstens eine Düsenöffnung (12) des Düsenkörpers (11) in unmittelbarer Nähe der Sitzleckagestelle des flüssigkeitsführenden Teils (1) positioniert wird.

2. Verfahren nach Anspruch 1,
**dadurch gekennzeichnet, dass** als Prüfflüssigkeit (10) n-Heptan zum Einsatz kommt.

3. Verfahren nach Anspruch 1 oder 2,
**dadurch gekennzeichnet, dass** als Trägergas (5) Stickstoff zum Einsatz kommt.

4. Verfahren nach einem der Ansprüche 1 bis 3,
**dadurch gekennzeichnet, dass** die Prüfflüssigkeit (10) und das Trägergas (5) jeweils in einem Temperaturbereich von -40°C bis 140°C bereitgestellt werden, wobei die Prüfflüssigkeit (10) mit einem Druck im Bereich von < 1 bis 200 bar in das flüssigkeitsführende Teil (1) eingebracht wird, während das Trägergas (5) in einem Druckbereich von 0.5 bis 2 bar eingeblasen wird.

5. Verfahren nach einem der Ansprüche 1 bis 4,
**dadurch gekennzeichnet, dass** der geförderte Trägergasstrom (5) zwischen 0,5 und 10 Normliter/min beträgt.

6. Verfahren nach einem der Ansprüche 1 bis 5,
**dadurch gekennzeichnet, dass** ein Beheizen des Damyfgemisches (6) hinter dem flüssigkeitsführenden Teil (1) erfolgt und das Beheizen des Dampfgemisches (6) mittels eines Heizelements (14), insbesondere eines Heizschlauchs erfolgt.

7. Verfahren nach einem der Ansprüche 1 bis 6,
**dadurch gekennzeichnet, dass** der Analysator (7) als Flammenionisationsdetektor und/oder Gaschromatograph ausgeführt ist, mit dem die HC-Konzentration im Dampfgemisch (6) gemessen und die hydraulische Leckrate des flüssigkeitsführenden Teils (1) analysiert wird.

8. Verfahren zum Betreiben einer Brennkraftmaschine, mit wenigstens einem Brennstoffeinspritzventil als flüssigkeitsführendem Teil (1),
**dadurch gekennzeichnet, dass** das Verfahren zur Ermittlung der hydraulischen Leckrate von flüssigkeitsführenden Teilen (1) nach einem der Ansprüche 1 bis 7 an dem wenigstens einen Brennstoffeinspritzventil (1) vor dem Einbau in die Brennkraftmaschine zur Anwendung kommt und nur diejenigen Brennstaffeinspritzventile (1) eingebaut werden, deren hydraulische Leckrate niedriger ist als eine vorher bestimmte Grenzwerdeckrate.

9. Vorrichtung zur Ermittlung der hydraulischen Leckrate von flüssigkeitsführenden Teilen, insbesondere Einspritzventilen für Brennkraftmaschinen mit einem Prüfkörper (2), in den das zu überprüfende flüssigkeitsführende Teil (1) einsetzbar ist, das mit einer Prüfflüssigkeit (10) beaufschlagbar ist, mit einem Strömungskanal (4) im Prüfkörper (2), in dem ein Trägergasstrom (5) bereitstellbar Ist und der dem Ableiten eines Dampfgemisches (6) hinter dem flüssigkeitsführenden Teil (1) bis hin zu einem Analysator (7) dient,
**dadurch gekennzeichnet, dass** ein Düsenkörper (11) nahe der Sitzleckagestelle des flüssigkeitsführenden Teils (1) zum Abblasen und Mitreißen der Prüfflüssigkeit (10) mittels des Trägergasstroms (5) positioniert ist, wobei der Düsenkörper (11) in das Innere des Strömungskanals (4) eingebracht und die wenigstens eine Düsenöffnung (12) des Düsenkörpers (11) in unmittelbarer Nähe der Sitzleckagestelle des flüssigkeitsführenden Teils (1) positioniert ist.

10. Vorrichtung nach Anspruch 9,
**dadurch gekennzeichnet, dass** der Strömungskanal (4) im Prüfkörper (2) weitgehend senkrecht zu einer Aufnahmebohrung (3) für das flüssigkeitsführende Teil (1) verläuft.

11. Vorrichtung nach Anspruch 9 oder 10.
**dadurch gekennzeichnet, dass** ein Helzelement (14) zur Erwärmung des Dampfgemisches (6) hinter dem flüssigkeitsführenden Teil (1) vorgesehen ist und das Heizelement (14) als Heizschlauch ausgeführt ist.

12. Vorrichtung nach einem der Ansprüche 9 bis 11,
**dadurch gekennzeichnet, dass** der Analysator (7) ein Flammenionisationsdetektor und/oder Gaschromatograph ist, mit dem die HC-Konzentration im Dampfgemisch (6) messbar ist.

## Claims

1. Method for determining the hydraulic leakage rate of liquid-conveying components, in particular injection valves for internal combustion engines, comprising the following method steps:
- inserting the liquid-conveying component (1) into a test body (2),
- applying a test liquid (10) at a specific pressure to the liquid-conveying component (1),
- making available a carrier gas stream (5) in a flow duct (4) of the test body (2),
- diverting a vapour mixture (6) downstream of the liquid-conveying component (1) as far as an analyser (7),
- measuring and analysing the hydraulic leakage rate of the liquid-conveying component (1) using the concentration of the test liquid (10) in the vapour mixture (6) by means of the analyser (7),
**characterized by** the method step
- introducing the carrier gas stream (5) via a nozzle body (11) near to the seat leakage point of the liquid-conveying component (1), wherein the nozzle body (11) is introduced into the interior of the flow duct (4), and the at least one nozzle opening (12) of the nozzle body (11) is positioned in the direct vicinity of the seat leakage point of the liquid-conveying component (1).

2. Method according to Claim 1,
**characterized in that** n-heptane is used as the test liquid (10).

3. Method according to Claim 1 or 2,
**characterized in that** nitrogen is used as the carrier gas (5).

4. Method according to one of Claims 1 to 3,
**characterized in that** the test liquid (10) and the carrier gas (5) are each made available in a temperature range from -40°C to 140°C, wherein the test liquid (10) is introduced at a pressure in the range of < 1 to 200 bar into the liquid-conveying component (1), while the carrier gas (5) is blown in in a pressure range from 0.5 to 2 bar.

5. Method according to one of Claims 1 to 4,
**characterized in that** the conveyed carrier gas stream (5) is between 0.5 and 10 standard litres/min.

6. Method according to one of Claims 1 to 5,
**characterized in that** the vapour mixture (6) is heated downstream of the liquid-conveying component (1), and the vapour mixture (6) is heated by means of a heating element (14), in particular a heating hose.

7. Method according to one of Claims 1 to 6,
**characterized in that** the analyser (7) is embodied as a flame ionization detector and/or gas chromatograph with which the HC concentration in the vapour mixture (6) is measured and the hydraulic leakage rate of the liquid-conveying component (1) is analysed.

8. Method for operating an internal combustion engine, having at least one fuel injection valve as a liquid-conveying component (1),
**characterized in that** the method is used to determine the hydraulic leakage rate of liquid-conveying components (1) according to one of Claims 1 to 7 at the at least one fuel injection valve (1) before installation in the internal combustion engine, and only those fuel injection valves (1) whose hydraulic leakage rate is lower than a previously determined limiting value leakage rate are installed.

9. Device for determining the hydraulic leakage rate of liquid-conveying components, in particular injection valves for internal combustion engines having a test body (2) into which the liquid-conveying component (1) to be tested can be inserted, and to which liquid-conveying component (1) a test liquid (10) can be applied, having a flow duct (4) in the test body (2) in which a carrier gas stream (5) can be made available and which serves to divert a vapour mixture (6) downstream of the liquid-conveying component (1) as far as an analyser (7),
**characterized in that** a nozzle body (11) is positioned near to the seat leakage point of the liquid-conveying component (1) in order to blow away and entrain the test liquid (10) by means of the carrier gas stream (5), wherein the nozzle body (11) is introduced into the interior of the flow duct (4), and the at least one nozzle opening (12) in the nozzle body (11) is positioned in the direct vicinity of the seat leakage point of the liquid-conveying component (1).

10. Device according to Claim 9,
**characterized in that** the flow duct (4) in the test body (2) runs largely perpendicularly with respect to a receptacle drilled hole (3) for the liquid-conveying component (1).

11. Device according to Claim 9 or 10,
**characterized in that** a heating element (14) is provided for heating the vapour mixture (6) downstream of the liquid-conveying component (1) and the heating element (14) is embodied as a heating hose.

12. Device according to one of Claims 9 to 11,
**characterized in that** the analyser (7) is a flame ionization detector and/or gas chromatograph with which the HC concentration in the vapour mixture (6) can be measured.

## Revendications

1. Procédé pour déterminer le débit de fuite hydraulique de parties conduisant des liquides, en particulier de soupapes d'injection de moteurs à combustion interne, comprenant les étapes de procédé suivantes :
- insertion de la partie conduisant des liquides (1) dans un corps d'essai (2),
- sollicitation de la partie conduisant des liquides (1) par un liquide d'essai (10) sous une pression déterminée,
- fourniture d'un courant de gaz porteur (5) dans un canal d'écoulement (4) du corps d'essai (2),
- dérivation d'un mélange de vapeur (6) derrière la partie conduisant des liquides (1) jusqu'à un analyseur (7),
- mesure et analyse du débit de fuite hydraulique de la partie conduisant des liquides (1) par le biais de la concentration du liquide d'essai (10) dans le mélange de vapeur (6) au moyen de l'analyseur (7),
**caractérisé par** l'étape de procédé suivante :
- introduction du courant de gaz porteur (5) par le biais d'un corps de buse (11) à proximité du point de fuite au niveau du siège de la partie conduisant des liquides (1), le corps de buse (11) étant introduit à l'intérieur du canal d'écoulement (4) et l'au moins une ouverture de buse (12) du corps de buse (11) étant positionnée à proximité immédiate du point de fuite au niveau du siège de la partie conduisant des liquides (1).

2. Procédé selon la revendication 1,
**caractérisé en ce que** l'on utilise en tant que liquide d'essai (10) du n-heptane.

3. Procédé selon la revendication 1 ou 2,
**caractérisé en ce que** l'on utilise comme gaz porteur (5) de l'azote.

4. Procédé selon l'une quelconque des revendications 1 à 3,
**caractérisé en ce que** le liquide d'essai (10) et le gaz porteur (5) sont fournis à chaque fois dans une plage de températures de -40°C à 140°C, le liquide d'essai (10) étant introduit à une pression comprise entre < 1 et 200 bar dans la partie conduisant des liquides (1), tandis que le gaz porteur (5) est soufflé dans une plage de pressions de 0,5 à 2 bar.

5. Procédé selon l'une quelconque des revendications 1 à 4,
**caractérisé en ce que** le débit de gaz porteur (5) transporté est compris entre 0,5 et 10 litres standard par minute.

6. Procédé selon l'une quelconque des revendications 1 à 5,
**caractérisé en ce qu'**un chauffage du mélange de vapeur (6) a lieu derrière la partie conduisant des liquides (1) et le chauffage du mélange de vapeur (6) s'effectue au moyen d'un élément chauffant (14), notamment d'un flexible de chauffage.

7. Procédé selon l'une quelconque des revendications 1 à 6,
**caractérisé en ce que** l'analyseur (7) est réalisé sous forme de détecteur d'ionisation de flamme et/ou sous forme de chromatographe gazeux, avec lequel la concentration en HC dans le mélange de vapeur (6) est mesurée et le débit de fuite hydraulique de la partie conduisant des liquides (1) est analysé.

8. Procédé pour faire fonctionner un moteur à combustion interne, comprenant au moins une soupape d'injection de carburant en tant que partie conduisant des liquides (1),
**caractérisé en ce que** le procédé est utilisé pour déterminer le débit de fuite hydraulique de parties conduisant des liquides (1) selon l'une quelconque des revendications 1 à 7 au niveau de l'au moins une soupape d'injection de carburant (1) avant l'installation dans le moteur à combustion interne et seulement les soupapes d'injection de carburant (1) dont le débit de fuite hydraulique est inférieur à un débit de fuite limite prédéterminé sont installées.

9. Dispositif pour déterminer le débit de fuite hydraulique de parties conduisant des liquides, en particulier de soupapes d'injection pour des moteurs à combustion interne comprenant un corps d'essai (2) dans lequel la partie conduisant des liquides (1) à contrôler peut être insérée, ladite partie pouvant être sollicitée par un liquide d'essai (10), un canal d'écoulement (4) dans le corps d'essai (2), dans lequel un courant de gaz porteur (5) peut être fourni, et qui sert à dévier un mélange de vapeur (6) derrière la partie conduisant des liquides (1) jusqu'à un analyseur (7),
**caractérisé en ce qu'**un corps de buse (11) est positionné à proximité du point de fuite au niveau du siège de la partie conduisant des liquides (1) pour souffler et entraîner le liquide d'essai (10) au moyen du courant de gaz porteur (5), le corps de buse (11) étant introduit à l'intérieur du canal d'écoulement (4) et l'au moins une ouverture de buse (12) du corps de buse (11) étant positionnée à proximité immédiate du point de fuite au niveau du siège de la partie conduisant des liquides (1).

10. Dispositif selon la revendication 9,
**caractérisé en ce que** le canal d'écoulement (4) s'étend dans le corps d'essai (2) essentiellement perpendiculairement à un alésage de réception (3) pour la partie conduisant des liquides (1).

11. Dispositif selon la revendication 9 ou 10,
**caractérisé en ce qu'**un élément chauffant (14) est prévu pour chauffer le mélange de vapeur (6) derrière la partie conduisant des liquides (1), et l'élément chauffant (14) est réalisé sous forme de flexible de chauffage.

12. Dispositif selon l'une quelconque des revendications 9 à 11,
**caractérisé en ce que** l'analyseur (7) est un détecteur d'ionisation de flamme et/ou un chromatographe gazeux, avec lequel la concentration en HC dans le mélange de vapeur (6) peut être mesurée.
